# EUROPEAN PATENT SPECIFICATION

(11) **EP 1 817 264 B1**
(45) Date of publication and mention of the grant of the patent: **14.08.2013**
(21) Application number: 05803449.7
(22) Date of filing: 08.11.2005
(51) Int. Cl.: C03C 17/36

(54) **GLAZING PANEL**
VERGLASUNGSSCHEIBE
VITRE

(30) Priority: 08.11.2004 EP 04105583
(43) Date of publication of application: 15.08.2007
(73) Proprietor: AGC Glass Europe, 1170 Bruxelles (Watermael-Boitsfort) (BE)
(72) Inventor: ROQUINY, Philippe GLAVERBEL - Centre R & D, B-6040 Jumet (BE); DEPAUW, Jean-Michel GLAVERBEL - Centre R & D, B-6040 Jumet (BE)
(74) Representative: Bayot, Daisy
(86) International application number: PCT/EP2005/055816
(87) International publication number: WO 2006/048462

(56) References cited:
- WO-A-00/76930
- WO-A-95/29883
- WO-A-97/48649
- WO-A1-2006/122900
- FR-A- 2 818 272
- FR-A1- 2 861 386
- US-A1- 2003 049 464
- US-A1- 2003 143 401
- US-B1- 6 478 932
- US-B1- 6 589 658

## Description

This invention relates to glazing panels and particularly, but not exclusively, to solar control and/or low emissivity glazing panels and/or glazing panels which may undergo heat treatment following application to the glazing substrate of an optical filter in the form of a coating stack. The invention relates more particularly to cases where a coating stack is applied to the glazing by a vacuum deposition technique, for example by sputtering or magnetron sputtering.

Multiple factors must be considered when designing coating stacks for glazing applications. These include not only the desired opto-energetic performance of the coated glazing panel but also, for example, the abrasion resistance of the coating stack (to facilitate handling, transport and processing), the stability and chemical durability of the coating stack (to facilitate storage under various conditions) and the tolerances of the control of the manufacturing process (to facilitate acceptable manufacturing yields and consistency between product runs).

It is known to apply a top coat to a coating stack particularly in an attempt to increase the abrasion resistance and/or chemical durability of a coating stack. GB 2,293,179 relates to a protective additional layer for improving chemical and mechanical durability of coated substrates, while minimising any consequential changes in the optical properties. This protective layer is formed of oxides or oxynitrides of silicon, or mixtures of one or more of oxides, nitrides and oxynitrides of silicon, and has a thickness of from 10 to 100 Å.

However we have found that such protective additional layer like the one described in GB 2,293,179, when deposited on some coating stacks, for example on a coating stack of the type "base antireflective layer / infra-red reflecting layer / top antireflective layer / top coat layer consisting essentially of at least one material selected from the group consisting of titanium, titanium oxide and titanium nitride", was not always offering a good resistance during transport and that scratches might appear at the surface of the coating. Scratches turned out to be even more numerous and visible when the coated glazing panel was heat-treated after its transport. By transport, it is meant herein transfer for example by trucks, in piles or boxes, from, for example, coater to wholesaler or transformer or to tempering furnace.

The present invention provides glazing panels, a method of manufacturing glazing panels and use of a top coat layer as defined in the independent claims. Preferred embodiments are defined in the dependent claims.

The present invention may provide an advantageous combination of good mechanical resistance, particularly good resistance to scratches during transport, heat treatability, chemical durability, humidity resistance and stability of manufacturing parameters.

The topcoat layer is a combination of at least two sublayers: the first topcoat sublayer is thought to provide inter alia a "reserve" useful when the glazing panel is to be heat-treated to ensure thermal protection to other parts of the coating stack during heat-treatment; and the second topcoat sublayer is thought to provide inter alia a mechanical protection to the coated glazing panel.

It has been found advantageous that the top coat layer comprises a first topcoat sublayer, underneath the second topcoat sublayer, consisting essentially of at least one material selected from the group consisting of titanium, titanium oxide and titanium nitride. One advantage of the first topcoat sublayer of the present invention is that it may provide to the glazing panel a particularly good chemical durability during storage, for example prior to heat treatment and/or assembly, with a facility to control the manufacturing tolerances and production process. This may be combined with an ability to provide thermal protection to other parts of the coating stack during heat treatment. Preferably, the first and second topcoat sublayers are in direct contact with each other, but in other embodiments, a further sublayer may be present between them. Still preferably, the top coat layer consists of two topcoat sublayers. However, in some embodiments, the top coat layer may comprise additional sublayers, for example under the first topcoat sublayer.

The first topcoat sublayer may comprise a material other than those cited above, for example, it may consist of, comprise or be based on:
■ Ti, Zr, Hf, V, Nb, Ta, Cr or their mixtures or a mixture of at least one of those metals with Al and/or B or
■ an oxide, a sub-stoichiometric oxide, a nitride or an oxynitride of Ti, Zr, Hf, V, Nb, Ta, Cr or their mixtures, or an oxide, a sub-stoichiometric oxide, a nitride or an oxynitride which is a mixture of at least one of those metals with Al and/or B.

The first topcoat sublayer may have a geometrical thickness in the range 20 to 100 A, preferably in the range 20 to 80 Å or 20 to 50 Å or 20 to 40 Å or 20 to 30 Å, and still more preferably in the range 25 to 30 Å. Thicknesses of at least 20 Å may allow to avoid damages when heat-treating the glazing panel and thicknesses of no more than 100 Å, preferably 80 Å or 50 Å, may avoid a too great decrease in the luminous transmittance of the coated glazing panel.

The second topcoat sublayer may consist essentially of silicon oxide, silicon nitride, silicon oxynitride, silicon carbide, silicon carbonitride, silicon oxycarbide, or silicon oxycarbonitride. Preferably, this layer is deposited by a vacuum deposition technique, particularly magnetron sputtering. The target used to deposit such a layer may be made of pure Si or Si doped with for example one or more of Al (for example 8% A1 in the Si target), Zr, Ti, NiCr, Ni, B or Sb, as is well-known in the art. The second topcoat sublayer may consequently incoporate relatively small amounts of such doping agent without departing from this invention. Targets of SiC, like target FG90 of Carborundum Company, may also be used.

The geometrical thickness of the second topcoat sublayer is in the range 15 to 30Å. Below 10 Å, the second topcoat sublayer may not be sufficiently thick to protect the coating stack against scratches, for example during transport. Furthermore, when the coated glazing panel is heat-treated after its formation or after its formation and transport, we have found that thicknesses of the second topcoat sublayer above 50 Å may provoke inacceptable scratches. These last scratches, appearing after a heat-treatment of the coated glazing panel, seem to be actually "dendrites" revealing fragility zones in the coating, i.e. a weakness of the coating itself when undergoing a heat-treatment. Such dendrites seem to form along the paths where a mechanical contact has been done prior to heat-treatment, showing, at macroscopic level, "scratches" which render the glazing panel unusable. When the first topcoat sublayer consists of, comprises or is based on Ti or one of its compound cited above, the geometrical thickness of the second topcoat sublayer is preferably in the range 15 to 25 Å.

Preferably, when the second topcoat sublayer consists essentially of silicon oxide, this oxide is fully oxidised; this may give optical advantages to the coating stack, a layer of fully oxidised silicon oxide having a lower impact on the colour, for example, of the entire coating stack. Alternatively, the second topcoat sublayer may consist essentially of sub-stoichiometric silicon oxide.

Preferably, the second topcoat sublayer is exposed to air, i.e. is the outermost layer of the coating stack. This may provide particularly good results in terms of mechanical resistance and heat-treatability.

In a preferred embodiment, the topcoat layer comprises a first topcoat sublayer consisting essentially of titanium nitride, having a geometrical thickness in the range 20 to 40 Å, and a second topcoat sublayer consisting essentially of silicon oxide, having a geometrical thickness in the range 15 to 25 Å.

The combination of properties that may be provided by the present invention have particular advantages in relation to heat treatable and heat treated glazing panels. Nevertheless, the invention may also be used in respect of glazings which are not heat treated. The term "heat treatable glazing panel" as used herein means that the glazing panel carrying the coating stack is adapted to undergo a bending and/or thermal tempering and/or thermal hardening operation and/or other heat treatment process without the haze of the so treated glazing panel exceeding 0.5, and preferably without the haze exceeding 0.3. Such heat treatment processes may involve heating or exposing the glazing carrying the coating stack or to a temperature greater than about 560°C, for example, between 560°C and 700°C in the atmosphere. Other such heat treatment processes may be sintering of a ceramic or enamel material, vacuum sealing of a double glazing unit and calcination of a wet-coated low reflective coating or anti-glare coating. The heat treatment process, especially when this is a bending and/or thermal tempering and/or thermal hardening operation, may be carried out at a temperature of at least, 600°C for at least 10 minutes, 12 minutes, or 15 minutes, at least 620°C for at least 10 minutes, 12 minutes, or 15 minutes, or at least 640°C for at least 10 minutes, 12 minutes, or 15 minutes.

The coating layers are preferably deposited by a vacuum deposition technique, particularly magnetron sputtering.

Glazing panels according to the invention may comprise one or more infra-red reflecting layers. These layers, which may be made of silver for example, act to reflect incident infra-red radiation. The dielectric antireflective layers which sandwich the infra-red reflecting layers serve to reduce the reflection of the visible portion of the spectrum which the silver layers would otherwise provoke.

Each antireflective dielectric layer may consist of a single layer or may comprise two or more sub-layers which together form the antireflective dielectric layer. The antireflective dielectric layers, or at least portion of the antireflective dielectric layers may comprise an oxide, for example an oxide comprising zinc and tin and/or zinc and aluminium.

The coating stack may comprise one or more barrier layers underlying and/or overlying the infra red reflecting layer, as is known in the art. Barriers of, for example, one or more of the following material may be used: Ti, Zn, Cr, "stainless steel", Zr, Nb, Ni, NiCr, NiTi, ZnTi and ZonAl. Such barriers may be deposited as metallic layers, as sub-oxides (i.e. partially oxidised layers) or as fully oxidised oxides. Alternatively, nitrided barrier layers may also be used. Each barrier layer may consist of a single layer or may comprise two or more sub-layers which together form the barrier layer. The barrier layer may comprise a first barrier layer in substantially metallic form, e.g. comprising nickel and chromium, and an overlying second barrier layer of a different composition from the first barrier layer (e.g. comprising titanium) which is in a form selected from the group consisting of oxides, sub-stoichiometric oxides, nitrides, sub-stoichiometric nitrides, oxynitrides and sub-stoichiometric oxynitrides.

We have observed that the best tool to simulate what a coated glazing panel undergoes when it is transported, is the Automatic Web Rub Test (AWRT). A piston covered with a cotton cloth (reference: CODE 40700004 supplied by ADSOL) is put in contact with the coating and oscillates over the surface. The piston carries a weight in order to have a force of 33N acting on a 17 mm diameter finger. The abrasion of the cotton over the coated surface will damage (remove) the coating after a certain number of cycles. The test is used to define the threshold before the coating discolours (removal of top layer) and before scratches appear in the coating. The test is realised for 10, 50, 100, 250, 500 and 1000 cycles, at separated distances over the sample. The sample is observed under an artificial sky to determine whether discoloration and/or scratches can be seen on the sample. The AWRT score indicates the number of cycles giving no or very light degradation (not visible with naked eye under uniform artificial sky at 80 cm distance from the sample). A "-" or a "+" is indicated after the AWRT score depending respectively if light scratches are appearing or not at all. Preferably, glazing panels according to the invention show AWRT values of at least 250, more preferably at least 500.

The coating stack of the glazing panel of the present invention may be such that if applied to a clear sheet of 4 mm glass it would give a TL measured with Illuminant C of greater than about 25%, 30%, 35%, 40%, 45%, 55%, 60%, 65%, 70%, 75%, 80%, 85% or 90%. Heat treatment may provoke an increase in the luminous transmittance (TL) of the glazing panel. Such an increase in TL may be advantageous in ensuring that TL is sufficiently high for the glazing panel to be used in high light transmittance glazings, for example, in vehicle windscreens or in architectural applications where the monolithic coated glazing panel is desired to have a TL greater than about 25%, 30%, 35%, 40%, 45%, 55%, 60%, 65%, 70%, 75%, 80%, 85% or 90% or in double glazing units where the double glazing unit is desired to have a TL greater than about 55%, 60%, 65%, 70%, 75%, 80% or 85%. TL may increase in absolute terms during heat treatment by, for example, greater than about 2.5%, greater than about 3%, greater than about 4%, greater than about 6%, greater than about 8% or greater than about 10%.

Glazing panels according to the invention may be suitable for assembly in a double glazing unit. They may be adapted, for example, for assembly in a double glazing unit with the coating stack in position 3 (interior surface of interior sheet of glass) or in position 2 (interior surface of exterior sheet of glass). At least one of the glazing panels forming the double glazing unit may be heat-treated before its assembly in the double glazing unit.

Embodiments of the invention will now be further described, by way of example only, along with comparative examples.

Coating stacks have been deposited by magnetron sputtering on glass substrates, according to the tables hereunder. The coating stacks are all described as they exit from the magnetron sputtering coater. Glass thickness is for all examples 6 mm except for example 9, where it is 2.6 mm. Similar results are to be expected on glass of other thickness, for example 4 mm.

In examples 1 to 6 and 11 and comparative examples 1 to 11, the coating stack is always the same, except for the topcoat layer. The antireflective layers comprise mixed oxides of zinc and tin in various proportions: Zn(50)Sn(50)Ox meaning a mixed oxide with 50% Zn and 50% Sn and Zn(90)Sn(10)Ox meaning a mixed oxide with 90% Zn and 10% Sn. Actually, the exact composition of the target used to give the Zn(50)Sn(50)Ox layer is Zn:52% Sn:48% by weight of these metals in the target. It corresponds to the composition which allows easily to form a zinc stannate, known in the art for its blocking properties during thermal treatments.

Comparative examples 1 and 2 illustrate that a topcoat layer comprising a single sublayer of TiN show poor results in AWRT test, the coating being deteriorated after less than 50 cycles, even when the thickness of the TiN sublayer is higher.

Comparative examples 3 to 7 and examples 1 to 3 illustrate the addition of a second topcoat sublayer of SiO2 above a first topcoat sublayer of TiN, this SiO2 sublayers showing different thicknesses. Comparative example 3 shows that the addition of a 10Å Si02 topcoat sublayer does not offer better results in AWRT test. Examples 1 to 3 and comparative examples 4 to 7 show however similar and good AWRT results, with SiO2 topcoat sublayers from 15 to 300Å. These coating stacks nevertheless differentiate each other in their ability to be heat-treated, for example tempered, without showing scratches after tempering. Comparative examples 4 to 7, with SiO2 thicknesses between 36 and 100 Å, show scratches both after tempering, and after transport (simulated by an AWRT test) and tempering. Whereas example 1, 2 and 3, with Si02 thicknesses of 15, 25 and 300 Å, offer the advantage of resisting well to AWRT test, and thus transport, and showing no scratches after tempering. Examples 1 and 2, which are part of this invention, are thus coatings offering a good mechanical resistance, e.g. a good resistance to transport, having the advantage of being heat-treatable. With reference to example 3, which is not part of this invention, note that due to the higher thickness of SiO2, a colour change may appear compared to the coated glazing panel without the SiO2 sublayer.

Comparative examples 8, 9 and 11 illustrate the advantage of a first topcoat sublayer of TiN for ensuring a good heat-treatability and stability of the coated glazing panel.

Comparative example 10 illustrates the advantage of having, in order, the second topcoat sublayer of Si02 above the first topcoat sublayer of TiN.

Examples 4, 5 and 6 illustrate other embodiments of the invention: a first topcoat sublayer of Ti, or a second topcoat sublayer of SiC. Example 4 shows before heat-treatement a luminous transmittance of 82%, an emissivity of 0.070 and an electrical resistance of 6 Ω/□, and after heat-treatment, a luminous transmittance of 89%, an emissivity of 0.045 and an electrical resistance of 4.5 Ω/□. Example 6 shows a luminous transmittance of 78% before heat-treatement, and of 89% after heat-treatment. Example 11 illustrates a first topcoat sublayer of Zr.

Examples 7 to 9 illustrate the application of the invention to double silver coating stacks, with different first topcoat sublayers, i.e. TiN, Ti, Ti02. Examples 7 and 8 are heat-treatable coatings offering a high selectivity; they show a luminous transmittance of 74% before tempering and of 81% after tempering, an emissivity of 0.018 and an electrical resistance per square of 1.6 Ω/□. A glazing panel according to example 9 may be used in the manufacture of a heatable solar-control windscreen for cars. Such windscreen shows a luminous transmittance of 77% under illuminant A, an energetic transmittance of 44% and an electrical resistance per square of 2.2 Ω/□.

Example 10 is a transport test of glazing panels according to the invention (sheets of glass bearing a coating stack according to example 1, except that the thickness of SiO2 was 20 Å) and of glazing panels not in accordance with the invention (sheets of glass bearing a coating stack according to comparative example 2). All these sheets of glass were subjected to the following steps:
■ Gathering of the glass sheets into piles of 2.5 T each, with 200 mg of interlaying powder by m² of glass between the sheets of glass.
■ Shipping after 3-months stocking
■ Loading in trucks with cardboard spacers between the piles
■ Pressure in the cushions of 4 bars
■ Journey of more than 1000 km, passing through the Alps, which is a critical case because of the road curves and the abrupt changes in temperature
■ Inspection of the glass sheets under a spot light: good result (no scratches, no discolouration) for the glass sheets with the SiO2 topcoat sublayer, contrary to the glass sheets without the SiO2 topcoat sublayer
■ Travel back to point of departure, new inspection, and always good result for the glass sheets with the SiO2 topcoat sublayer
■ Shipping of the glass sheets with the Si02 topcoat sublayer which have travel as hereinabove described, to a tempering furnace, 6 months after the glass sheets have been coated
■ Handling, cutting, processing of the glass sheets
■ Tempering
■ At the oven exit, no mechanical defect visible at the naked eye.

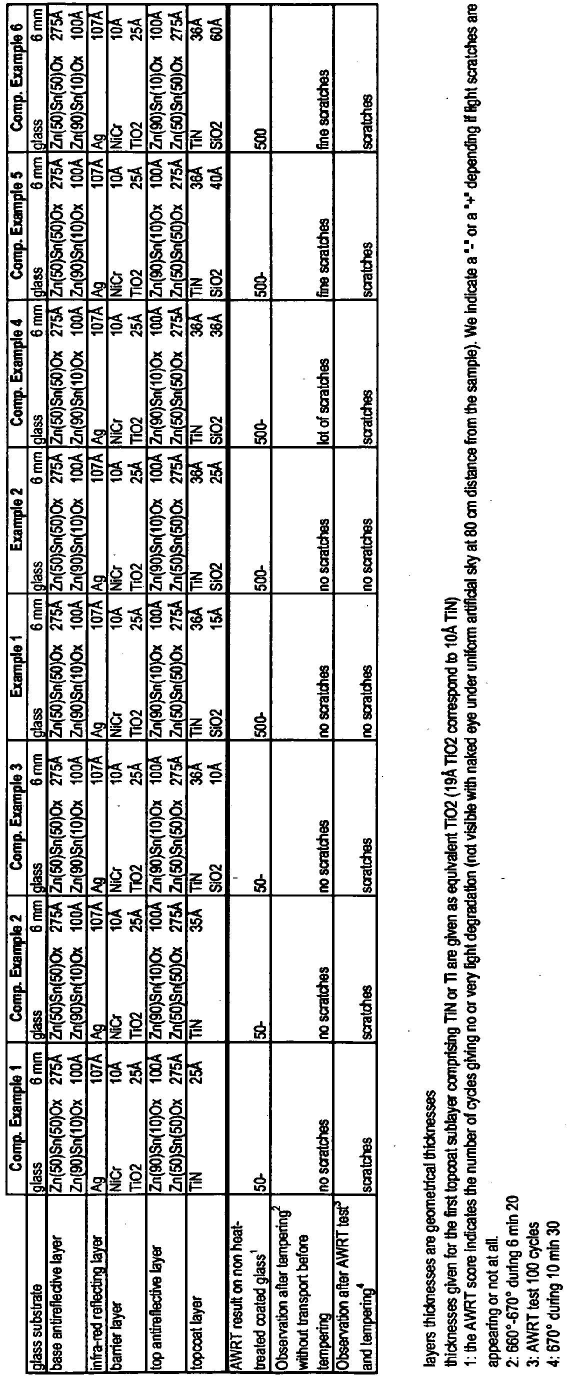

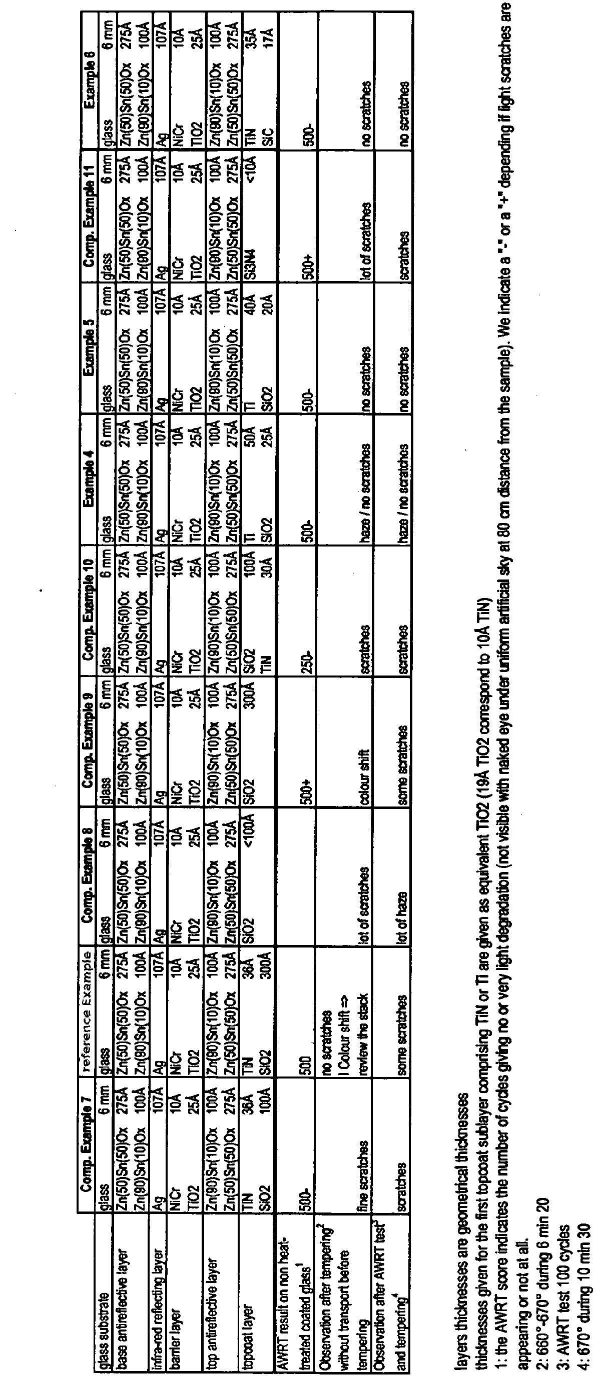

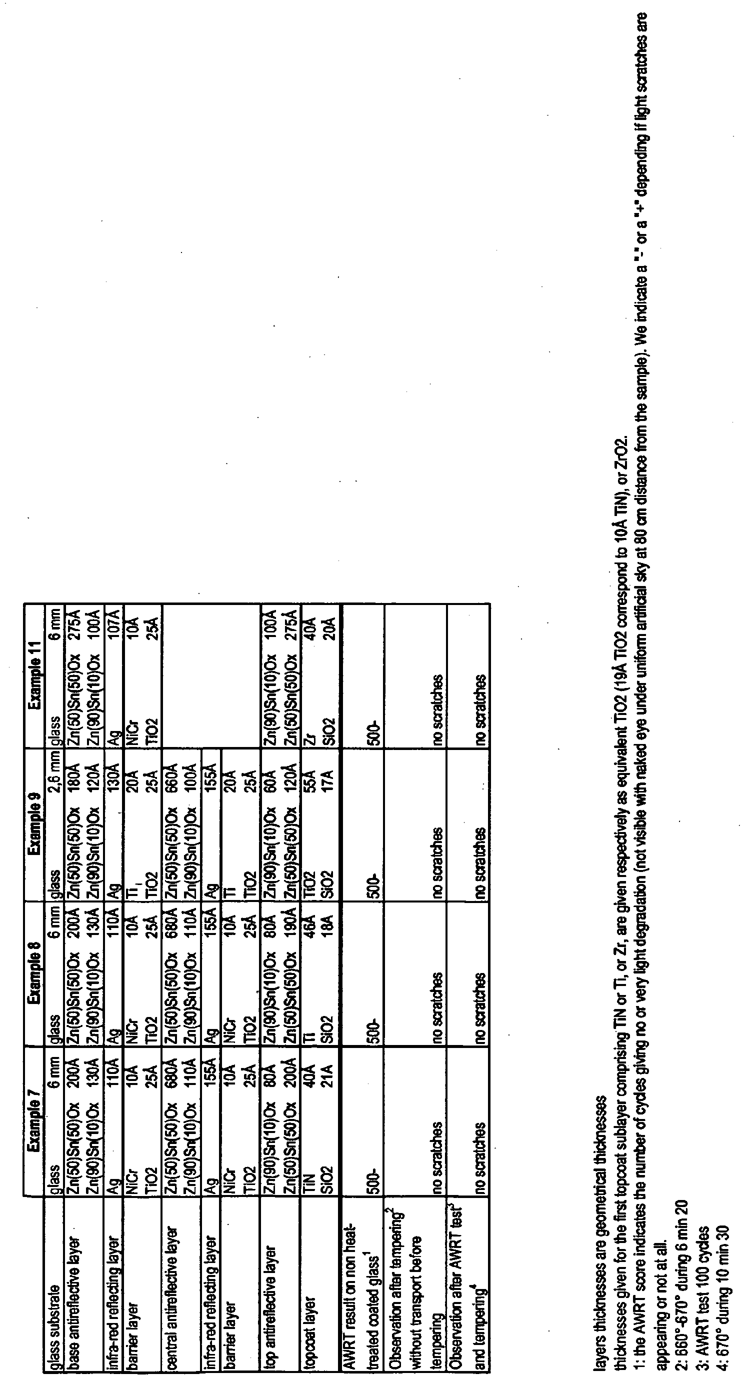

## Claims

1. A glazing panel carrying a coating stack comprising in sequence at least :
a glass substrate
a base antireflective layer
an infra-red reflecting layer
a top antireflective layer
a top coat layer
in which the top coat layer comprises at least two sublayers:
a first topcoat sublayer consisting essentially of at least one material selected from the group consisting of Ti, Zr, Hf, V, Nb, Ta, Cr or their mixtures or a mixture of at least one of those metals with Al and/or B or an oxide, a sub-stoichiometric oxide, a nitride or an oxynitride of Ti, Zr, Hf, V, Nb, Ta, Cr or their mixtures, or an oxide, a sub-stoichiometric oxide, a nitride or an oxynitride which is a mixture of at least one of those metals with Al and/or B, and
a second topcoat sublayer, above the first top coat sublayer, consisting essentially of silicon oxide, silicon sub-stoichiometric oxide, silicon nitride, silicon oxynitride, silicon carbide, silicon carbonitride, silicon oxycarbide, or silicon oxycarbonitride, the second topcoat sublayer having a geometrical thickness in the range 15 to 30 Å.

2. A glazing panel in accordance with claim 1, in which the first topcoat sublayer consists essentially of at least one material selected from the group consisting of titanium, titanium oxide, titanium sub-stoichiometric oxide, titanium nitride and titanium oxynitride.

3. A glazing panel in accordance with claim 2, in which the first topcoat sublayer consists essentially of at least one material selected from the group consisting of titanium, titanium oxide and titanium nitride.

4. A glazing panel in accordance with any preceding claim, in which the second topcoat sublayer is in direct contact with the first topcoat sublayer.

5. A glazing panel in accordance with any preceding claim, in which the second topcoat sublayer is exposed to air.

6. A glazing panel in accordance with any preceding claim, in which the first topcoat sublayer has a geometrical thickness in the range 20 to 100 Å.

7. A glazing panel in accordance claim 6, in which the first topcoat sublayer has a geometrical thickness in the range 20 to 80 Å.

8. A glazing panel in accordance with any preceding claim, in which the topcoat layer comprises a first topcoat sublayer consisting essentially of titanium nitride and a second topcoat sublayer consisting essentially of silicon oxide.

9. A glazing panel in accordance with claim 8, in which the sublayer consisting essentially of titanium nitride has a geometrical thickness in the range 20 to 40 Å and the sublayer consisting essentially of silicon oxide has a geometrical thickness in the range 15 to 25 Å.

10. A glazing panel in accordance with any preceding claim, in which the glazing panel is heat-treatable.

11. A glazing panel in accordance with any preceding claim, in which at least one of the antireflective layers comprises an oxide.

12. A glazing panel in accordance with any preceding claim, in which at least one of the antireflective layers comprises a mixed oxide of zinc and one or more of tin, aluminium and titanium.

13. A glazing panel in accordance with any preceding claim, carrying a coating stack comprising in sequence at least:
a glass substrate
a base antireflective layer
a first infra-red reflecting layer
a central antireflective layer
a second infra-red reflecting layer
a top antireflective layer
a top coat layer

14. A glazing panel in accordance with any preceding claim, comprising in sequence at least :
a glass substrate;
a base antireflective layer comprising at least one layer comprising a mixed oxide of zinc and tin;
an infra-red reflecting layer;
a barrier layer;
a top antireflective layer comprising at least one layer comprising a mixed oxide of zinc and tin; and
a top coat layer comprising in sequence a first sublayer consisting essentially of titanium nitride and a second sublayer consisting essentially of silicon oxide.

15. A glazing panel in accordance with claim 14, in which the barrier layer is selected from the group consisting of a barrier layer in substantially metallic form and a barrier layer comprising a first barrier layer in substantially metallic form and an overlying second barrier layer of a different composition from the first barrier layer which is in a form selected from the group consisting of oxides, sub-stoichiometric oxides, nitrides, sub-stoichiometric nitrides, oxynitrides and sub-stoichiometric oxynitrides.

16. A glazing panel in accordance with claim 14 or claim 15, in which the barrier is selected from the group consisting of a barrier layer comprising titanium and a barrier layer comprising a first barrier layer comprising nickel and chromium and an overlying second barrier layer comprising titanium.

17. A glazing panel in accordance with any preceding claim, in which the coated glazing panel has a luminous transmittance of greater than 70%.

18. A glazing panel in accordance with any preceding claim, in which a heat treatment provokes an increase in the luminous transmittance of the glazing panel.

19. A glazing panel in accordance with any preceding claim, which is adapted for assembly in a double glazing unit.

20. A glazing panel in accordance with claim 19, in which the glazing panel is adapted to be heat treated prior to assembly in a double glazing unit.

21. A glazing panel in accordance with any preceding claim, which shows a AWRT score of at least 250.

22. A double glazing unit comprising at least one glazing panel in accordance with any preceding claim.

23. A double glazing unit comprising at least one heat-treated glazing panel in accordance with any preceding claim.

24. A double glazing unit in accordance with claim 22 or claim 23, in which the double glazing unit has a luminous transmittance of greater than 70%.

25. A method of manufacturing a heat treated glazing panel comprising the steps of, in order:
a) depositing a coating stack on a glass substrate to provide an intermediate glazing panel according to any of claims 1 to 17 or 19 to 21
b) subjecting the coated, intermediate glazing panel to a heat treatment process in air at a temperature of greater than 550°C.

26. A method in accordance with claim 25, in which the luminous transmittance of the heat treated glazing panel following the step of heat treatment is greater than the luminous transmittance of the intermediate glazing panel by at least 6%.

27. Use of a top coat layer comprising at least two sublayers:
a first topcoat sublayer consisting essentially of at least one material selected from the group consisting of Ti, Zr, Hf, V, Nb, Ta, Cr or their mixtures or a mixture of at least one of those metals with A1 and/or B or an oxide, a sub-stoichiometric oxide, a nitride or an oxynitride of Ti, Zr, Hf, V, Nb, Ta, Cr or their mixtures, or an oxide, a sub-stoichiometric oxide, a nitride or an oxynitride which is a mixture of at least one of those metals with Al and/or B, and
a second topcoat sublayer, above the first top coat sublayer, having a geometrical thickness in the range 15 to 30 Å and consisting essentially of silicon oxide, silicon sub-stoichiometric oxide, silicon nitride, silicon oxynitride, silicon carbide, silicon carbonitride, silicon oxycarbide, or silicon oxycarbonitride,
to enhance the mechanical resistance before heat treatment of a heat treatable coated glazing panel having at least one metallic infra red reflecting coating layer sandwiched between dielectric layers and to reduce the number of scratches visible at the surface of the coated glazing panel after heat treatment.

## Patentansprüche

1. Verglasungsscheibe, welche einen Beschichtungsstapel trägt und in Reihenfolge mindestens umfaßt:
ein Glassubstrat,
eine Basis-Antireflexionsschicht,
eine Infrarot reflektierende Schicht,
eine obere Antireflexionsschicht,
eine obere Deckschicht,
wobei die obere Deckschicht mindestens zwei Teilschichten umfaßt:
Eine erste obere Deck-Teilschicht, bestehend im wesentlichen aus mindestens einem Material, ausgewählt aus der Gruppe, bestehend aus Ti, Zr, Hf, V, Nb, Ta, Cr oder deren Gemischen, oder einem Gemisch von mindestens einem dieser Metalle mit Al und/oder B, oder einem Oxid, einem substöchiometrischen Oxid, einem Nitrid oder einem Oxynitrid von Ti, Zr, Hf, V, Nb, Ta, Cr oder deren Gemischen, oder einem Oxid, einem substöchiometrischen Oxid, einem Nitrid oder einem Oxynitrid, welches ein Gemisch von mindestens einem dieser Metalle mit Al und/oder B ist, und
eine zweite obere Deck-Teilschicht, oberhalb der ersten oberen Deck-Teilschicht, bestehend im wesentlichen aus Siliciumoxid, Silicium unter-stöchiometrischem Oxid, Siliciumnitrid, Siliciumoxynitrid, Siliciumcarbid, Siliciumcarbonitrid, Siliciumoxycarbid, oder Siliciumoxycarbonitrid, wobei die zweite obere Deck-Teilschicht eine geometrische Dicke im Bereich von 15 bis 30 Å aufweist.

2. Verglasungsscheibe nach Anspruch 1, in welcher die erste obere Deck-Teilschicht im wesentlichen aus mindestens einem Material besteht, ausgewählt aus der Gruppe, bestehend aus Titan, Titanoxid, Titan substöchiometrischem Oxid, Titannitrid und Titanoxynitrid.

3. Verglasungsscheibe nach Anspruch 2, in welcher die erste obere Deck-Teilschicht im wesentlichen aus mindestens einem Material besteht, ausgewählt aus der Gruppe, bestehend aus Titan, Titanoxid und Titannitrid.

4. Verglasungsscheibe nach einem der vorhergehenden Ansprüche, in welcher sich die zweite obere Deck-Teilschicht in direktem Kontakt mit der ersten oberen Deck-Teilschicht befindet.

5. Verglasungsscheibe nach einem der vorhergehenden Ansprüche, in welcher die zweite obere Deck-Teilschicht Luft ausgesetzt ist.

6. Verglasungsscheibe nach einem der vorhergehenden Ansprüche, in welcher die erste obere Deck-Teilschicht eine geometrische Dicke im Bereich von 20 bis 100 Å aufweist.

7. Verglasungsscheibe nach Anspruch 6, in welcher die erste obere Deck-Teilschicht eine geometrische Dicke im Bereich von 20 bis 80 Å aufweist.

8. Verglasungsscheibe nach einem der vorhergehenden Ansprüche, in welcher die obere Deckschicht eine erste obere Deck-Teilschicht, bestehend im wesentlichen aus Titannitrid, und eine zweite obere Deck-Teilschicht, bestehend im wesentlichen aus Siliciumoxid, umfaßt.

9. Verglasungsscheibe nach Anspruch 8, in welcher die Teilschicht, welche im wesentlichen aus Titannitrid besteht, eine geometrische Dicke im Bereich von 20 bis 40 Å aufweist, und die Teilschicht, welche im wesentlichen aus Siliciumoxid besteht, eine geometrische Dicke im Bereich von 15 bis 25 Å aufweist.

10. Verglasungsscheibe nach einem der vorhergehenden Ansprüche, in welcher die Verglasungsscheibe wärmebehandelbar ist.

11. Verglasungsscheibe nach einem der vorhergehenden Ansprüche, in welcher mindestens eine der Antireflexionsschichten ein Oxid umfaßt.

12. Verglasungsscheibe nach einem der vorhergehenden Ansprüche, in welcher mindestens eine der Antireflexionsschichten ein gemischtes Oxid von Zink und einem oder mehreren von Zinn, Aluminium und Titan umfaßt.

13. Verglasungsscheibe nach einem der vorhergehenden Ansprüche, welcher einen Beschichtungsstapel trägt, umfassend in Reihenfolge mindestens:
ein Glassubstrat,
eine Basis-Antireflexionsschicht,
eine erste Infrarot reflektierende Schicht,
eine zentrale Antireflexionsschicht,
eine zweite Infrarot reflektierende Schicht,
eine obere Antireflexionsschicht,
eine obere Deckschicht.

14. Verglasungsscheibe nach einem der vorhergehenden Ansprüche, umfassend in Reihenfolge mindestens:
ein Glassubstrat,
eine Basis-Antireflexionsschicht, umfassend mindestens eine Schicht, umfassend ein gemischtes Oxid aus Zink und Zinn,
eine Infrarot reflektierende Schicht,
eine Barriereschicht,
eine obere Antireflexionsschicht, umfassend mindestens eine Schicht, umfassend ein gemischtes Oxid aus Zink und Zinn, und
eine obere Deckschicht, umfassend in Reihenfolge eine erste Teilschicht, bestehend im wesentlichen aus Titannitrid, und eine zweite Teilschicht, bestehend im wesentlichen aus Siliciumoxid.

15. Verglasungsscheibe nach Anspruch 14, in welcher die Barriereschicht ausgewählt ist aus der Gruppe, bestehend aus einer Barriereschicht in im wesentlichen metallischer Form und einer Barriereschicht, umfassend eine erste Barriereschicht in im wesentlichen metallischer Form und eine darüber liegende zweite Barriereschicht einer Zusammensetzung, welche von der erste Barriereschicht verschieden ist, welche in einer Form vorliegt, ausgewählt aus der Gruppe, bestehend aus Oxiden, substöchiometrischen Oxiden, Nitriden, substöchiometrischen Nitriden, Oxynitriden und substöchiometrischen Oxynitriden.

16. Verglasungsscheibe nach Anspruch 14 oder Anspruch 15, in welcher die Barriere ausgewählt ist aus der Gruppe, bestehend aus einer Barriereschicht, umfassend Titan und einer Barriereschicht, umfassend eine erste Barriereschicht, umfassend Nickel und Chrom und eine darüber liegende zweite Barriereschicht, umfassend Titan.

17. Verglasungsscheibe nach einem der vorhergehenden Ansprüche, in welcher die beschichtete Verglasungsscheibe einen Lichttransmissionsgrad von mehr als 70% aufweist.

18. Verglasungsscheibe nach einem der vorhergehenden Ansprüche, in welcher eine Wärmebehandlung einen Anstieg des Lichttransmissionsgrads des Verglasungsscheibes hervorruft.

19. Verglasungsscheibe nach einem der vorhergehenden Ansprüche, welche für den Einbau in eine Doppelverglasungseinheit eingerichtet ist.

20. Verglasungsscheibe nach Anspruch 19, wobei die Verglasungsscheibe eingerichtet ist, vor dem Einbau in eine Doppelverglasungseinheit wärmebehandelt zu werden.

21. Verglasungsscheibe nach einem der vorhergehenden Ansprüche, welche eine AWRT-Punktzahl von mindestens 250 zeigt.

22. Doppelverglasungseinheit, umfassend mindestens eine Verglasungsscheibe nach einem der vorhergehenden Ansprüche.

23. Doppelverglasungseinheit, umfassend mindestens eine wärmebehandelte Verglasungsscheibe nach einem der vorhergehenden Ansprüche.

24. Doppelverglasungseinheit nach Anspruch 22 oder Anspruch 23, wobei die Doppelverglasungseinheit einen Lichttransmissionsgrad von mehr als 70% aufweist.

25. Verfahren zur Herstellung einer wärmebehandelten Verglasungsscheibe, umfassend die Schritte, in Reihenfolge:
a) Ablagern eines Beschichtungsstapels auf einem Glassubstrat, um eine Zwischen-Verglasungsscheibe nach einem der Ansprüche 1 bis 17 oder 19 bis 21 bereitzustellen,
b) Das Unterziehen der beschichteten Zwischen-Verglasungsscheibe einem Wärmebehandlungsverfahren in Luft bei einer Temperatur von mehr als 550°C.

26. Verfahren nach Anspruch 25, wobei der Lichttransmissionsgrad der wärmebehandelten Verglasungsscheibe infolge des Schrittes der Wärmebehandlung um mindestens 6% größer ist, als der Lichttransmissionsgrad der Zwischen-Verglasungsscheibe.

27. Verwendung einer oberen Deckschicht, umfassend mindestens zwei Teilschichten:
eine erste obere Deck-Teilschicht, bestehend im wesentlichen aus mindestens einem Material, ausgewählt aus der Gruppe, bestehend aus Ti, Zr, Hf, V, Nb, Ta, Cr oder deren Gemischen, oder einem Gemisch aus mindestens einem dieser Metalle mit Al und/oder B, oder einem Oxid, einem substöchiometrischem Oxid, einem Nitrid oder einem Oxynitrid von Ti, Zr, Hf, V, Nb, Ta, Cr oder
deren Gemischen, oder einem Oxid, einem substöchiometrischen Oxid, einem Nitrid oder einem Oxynitrid, welches ein Gemisch von mindestens einem dieser Metall mit Al und/oder B ist, und
eine zweite obere Deck-Teilschicht, oberhalb der ersten oberen Deck-Teilschicht, welche eine geometrische Dicke im Bereich von 15 bis 30 Å aufweist, und im wesentlichen aus Siliciumoxid, Silicium substöchiometrischem Oxid, Siliciumnitrid, Siliciumoxynitrid, Siliciumcarbid, Siliciumcarbonitrid, Siliciumoxycarbid, oder Siliciumoxycarbonitrid besteht,
zur Verstärkung der mechanischen Widerstandsfähigkeit vor der Wärmebehandlung einer wärmebehandelbaren beschichteten Verglasungsscheibe mit mindestens einer metallischen Infrarot reflektierenden Deckschicht, welche sandwichartig zwischen dielektrischen Schichten angeordnet ist, und zur Verminderung der Anzahl sichtbarer Kratzer in der Oberfläche der beschichteten Verglasungsscheibe nach der Wärmebehandlung.

## Revendications

1. Vitre portant un empilement comprenant successivement au moins :
un substrat en verre
une couche de base antireflet
une couche réfléchissant l'infrarouge
une couche supérieure antireflet
une couche de revêtement supérieure
dans laquelle la couche de revêtement supérieure comprend au moins deux sous-couches :
une première sous-couche de couche supérieure consistant essentiellement en au moins un matériau sélectionné parmi le groupe consistant en du Ti, du Zr, du Hf, du V, du Nb, du Ta, du Cr ou leurs mélanges ou un mélange d'au moins un de ces métaux avec de l'AI et/ou du B ou un oxyde, un oxyde sous-stoechiométrique, un nitrure ou un oxynitrure qui est un mélange d'au moins un de ces métaux avec de l'Al er/ou du B, et
une seconde sous-couche de couche supérieure, au-dessus de la première sous-couche de couche supérieure, consistant essentiellement en de l'oxyde de silicium, de l'oxyde sous-stoechiométrique de silicium, du nitrure de silicium, de l'oxynitrure de silicium, du carbure de silicium, du carbonitrure de silicium, de l'oxycarbure de silicium ou de l'oxycarbonitrure de silicium, la seconde sous-couche de couche supérieure ayant une épaisseur géométrique dans la gamme de 15 à 30 Å.

2. Vitre selon la revendication 1, dans laquelle la première sous-couche de couche supérieure consiste essentiellement en au moins un matériau sélectionné parmi le groupe consistant en du titane, de l'oxyde de titane, de l'oxyde sous-stoechiométrique de titane, du nitrure de titane et de l'oxynitrure de titane.

3. Vitre selon la revendication 2, dans laquelle la première sous-couche de couche supérieure consiste essentiellement en au moins un matériau sélectionné parmi le groupe consistant en du titane, de l'oxyde de titane, et du nitrure de titane.

4. Vitre selon l'une quelconque des revendications précédentes, dans laquelle la seconde sous-couche de couche supérieure est en contact direct avec la première sous-couche de couche supérieure.

5. Vitre selon l'une quelconque des revendications précédentes, dans laquelle la seconde sous-couche de couche supérieure est exposée à l'air.

6. Vitre selon l'une quelconque des revendications précédentes, dans laquelle la première sous-couche de couche supérieure a une épaisseur géométrique dans la gamme de 20 à 100 Å.

7. Vitre selon la revendication 6, dans laquelle la première sous-couche optique a une épaisseur géométrique dans la gamme de 20 à 80 Å.

8. Vitre selon l'une quelconque des revendications précédentes, dans laquelle la couche de revêtement supérieure comprend une première sous-couche de couche supérieure consistant essentiellement en du nitrure de titane et une seconde sous-couche de couche supérieure consistant essentiellement en de l'oxyde de silicium.

9. Vitre selon la revendication 8, dans laquelle la sous-couche consistant essentiellement en du nitrure de titane a une épaisseur géométrique dans la gamme de 20 à 40 Å et la sous-couche consistant essentiellement en de l'oxyde de silicium a une épaisseur géométrique dans la gamme de 15 à 25 Å.

10. Vitre selon l'une quelconque des revendications précédentes, dans laquelle la vitre est traitable thermiquement.

11. Vitre selon l'une quelconque des revendications précédentes, dans laquelle au moins une des couches antireflet comprend un oxyde.

12. Vitre selon l'une quelconque des revendications précédentes, dans laquelle au moins une des couches antireflet comprend un oxyde mélangé de zinc et un ou plusieurs de l'étain, de l'aluminium et du titane.

13. Vitre selon l'une quelconque des revendications précédentes, portant un empilement comprenant successivement au moins :
un substrat en verre
une couche de base antireflet
une couche réfléchissant l'infrarouge
une couche centrale antireflet
une couche réfléchissant l'infrarouge
une couche supérieure antireflet
une couche de revêtement supérieure

14. Vitre selon l'une quelconque des revendications précédentes, comprenant successivement au moins :
un substrat en verre ;
une couche de base antireflet comprenant au moins une couche comprenant un oxyde mélangé de zinc et d'étain ;
une couche réfléchissant l'infrarouge ;
une couche barrière ;
une couche supérieure antireflet comprenant au moins une couche comprenant un oxyde mélangé de zinc et d'étain ; et
une couche de revêtement supérieure comprenant une succession d'une première sous-couche consistant essentiellement en du nitrure de titane et une seconde sous-couche consistant essentiellement en de l'oxyde de silicium.

15. Vitre selon la revendication 14, dans laquelle la couche barrière est sélectionnée parmi un groupe consistant en une couche barrière de forme substantiellement métallique et une couche barrière comprenant une première couche barrière de forme métallique et une seconde couche barrière sus-jacente d'une composition différente de la première couche barrière qui est d'une forme sélectionnée parmi le groupe consistant en des oxydes, des oxydes sous-stoechiométriques, des nitrures, des nitrures sous-stoechiométriques, des oxynitrures et des oxynitrures sous-stoechiométriques.

16. Vitre selon la revendication 14 ou la revendication 15, dans laquelle la barrière est sélectionnée parmi un groupe consistant en une couche barrière comprenant du titane et une couche barrière comprenant une première couche barrière comprenant du nickel et du chrome et une seconde couche barrière sus-jacente comprenant du titane.

17. Vitre selon l'une quelconque des revendications précédentes, dans laquelle la vitre revêtue a une transmission lumineuse supérieure à 70%.

18. Vitre selon l'une quelconque des revendications précédentes, dans laquelle un traitement thermique provoque une augmentation de la transmission lumineuse de la vitre.

19. Vitre selon l'une quelconque des revendications précédentes, qui est adaptée pour être montée dans un double vitrage.

20. Vitre selon la revendication 19, dans laquelle la vitre est adaptée pour être traitée thermiquement avant le montage dans un double vitrage.

21. Vitre selon l'une quelconque des revendications précédentes, qui présente un score AWRT d'au moins 250.

22. Un ensemble de double vitrage comprenant au moins une vitre selon l'une quelconque des revendications précédentes.

23. Un ensemble de double vitrage comprenant au moins une vitre traitée thermiquement selon l'une quelconque des revendications précédentes.

24. Un ensemble de double vitrage selon la revendication 22 ou la revendication 23, dans lequel l'ensemble de double vitrage a une transmission lumineuse supérieure à 70 %.

25. Méthode de fabrication d'une vitre traitée thermiquement comprenant les étapes suivantes, dans l'ordre :
a) déposer un empilement sur un substrat en verre pour former une vitre intermédiaire selon l'une quelconque des revendications 1 à 17 ou 19 à 21 ;
b) soumettre la vitre intermédiaire revêtue à un procédé de traitement thermique dans l'air à une température supérieure à 550°C.

26. Méthode selon la revendication 25, dans laquelle la transmission lumineuse de la vitre traitée thermiquement suite à l'étape du traitement thermique est supérieure à la transmission lumineuse d'au moins 6 % à celle de la vitre intermédiaire.

27. Utilisation d'une couche de revêtement supérieure comprenant au moins deux sous-couches :
une première sous-couche de couche supérieure consistant essentiellement en au moins un matériau sélectionné parmi le groupe consistant en du Ti, du Zr, du Hf, du V, du Nb, du Ta, du Cr ou leurs mélanges ou un mélange d'au moins un de ces métaux avec de l'Al et/ou du B ou un oxyde, un oxyde sous-stoechiométrique, un nitrure ou un oxynitrure de Ti, de Zr, de Hf, de V, de Nb, de Ta, de Cr ou de leurs mélanges, ou un oxyde, ou un oxyde sous-stoechiométrique, un nitrure ou un oxynitrure qui est un mélange d'au moins un de ces métaux avec de l'Al er/ou du B, et
une seconde sous-couche de couche supérieure, au-dessus de la première sous-couche de couche supérieure, ayant une épaisseur géométrique dans la gamme de 15 à 30 Å et consistant essentiellement en de l'oxyde de silicium, de l'oxyde sous-stoechiométrique de silicium, du nitrure de silicium, de l'oxynitrure de silicium, du carbure de silicium, du carbonitrure de silicium, de l'oxycarbure de silicium ou de l'oxycarbonitrure de silicium,
pour améliorer la résistance mécanique avant le traitement thermique d'une vitre revêtue susceptible d'être traitée thermiquement ayant au moins une couche de revêtement réfléchissant l'infrarouge interposée entre des couches diélectriques et pour réduire le nombre de griffes visibles à la surface de la vitre revêtue après le traitement thermique.
